Europäisches Patentamt

**European Patent Office**

**Office européen des brevets**

(19)

(11) Veröffentlichungsnummer: **0 227 084 B1**

(12) **EUROPÄISCHE PATENTSCHRIFT**

(45) Veröffentlichungstag der Patentschrift:
**17.05.89**

(21) Anmeldenummer: **86117862.2**

(22) Anmeldetag: **22.12.86**

(51) Int. Cl.⁴: **B01D 25/02, B01D 25/12**

(54) **Filterpresse.**

(30) Priorität: **23.12.85 EP 85116512**

(43) Veröffentlichungstag der Anmeldung:
**01.07.87 Patentblatt 87/27**

(45) Bekanntmachung des Hinweises auf die Patenterteilung:
**17.05.89 Patentblatt 89/20**

(84) Benannte Vertragsstaaten:
**ES GR**

(56) Entgegenhaltungen:
**EP-A- 0 178 389**
**DE-A- 2 551 467**
**DE-A- 2 908 880**
**US-A- 2 975 903**

(73) Patentinhaber: **BAUKO BAUKOOPERATION GMBH,**
**Sterneckstrasse 55, A-5020 Salzburg(AT)**

(72) Erfinder: **Kupka, Dieter, Brucklacher Str. 12a,**
**D-8852 Rain/Lech(DE)**

(74) Vertreter: **Körner, Ekkehard, Dipl.-Ing., Patentanwalt**
**Maximilianstrasse 58, D-8000 München 22(DE)**

ACTORUM AG

**Beschreibung**

Die Erfindung bezieht sich auf eine Filterpresse nach dem Oberbegriff des Anspruchs 1. Eine solche Filterpresse ist aus der US-A 2 975 903 bekannt.

Die in dieser Druckschrift beschriebene Filterpresse besteht aus einem am Boden abgestützten Gehäuse von im wesentlichen zylindrischen Querschnitt, dessen Mantel am einen Ende von einer festen Stirnwand und am anderen Ende von einer axial verschiebbaren Stirnwand verschlossen ist. Auf dem Mantel ist eine Laufschiene befestigt, an der ein Wagen verschiebbar geführt ist, der die bewegliche Stirnwand trägt. Innerhalb des Gehäuses ist an der beweglichen Stirnwand ein Gestell befestigt, das sich in axialer Richtung in das Gehäuse erstreckt und eine Vielzahl axial hintereinander und parallel zueinander angeordneter Filterrahmen trägt. Das Gestell weist an dem der beweglichen Stirnwand abgewandten Ende Laufrollen auf, die auf Schienen laufen, die an den inneren Seitenwänden des Gehäusemantels befestigt sind. Das Gestell wird im wesentlichen von Rohren gebildet, die der Abführung von Filtrat aus den von den Filterrahmen jeweils umschlossenen Filtratkammern dienen.

Zum Öffnen der Filterpresse wird die verschiebbare Stirnwand mitsamt des daran befestigten Gestells verschoben, sodaß das Gestell und die davon getragenen Filterrahmen aus dem Gehäuse herausgezogen werden. Um dies zu ermöglichen, müssen zunächst die äußeren Verbindungen an den genannten Rohren gelöst werden. Die Filterpresse weist die allen Filterpressen mit ungenügender Trübebewegung innewohnenden Nachteile auf, insbesondere das rasche Absetzen von Feststoffen auf den Filterhilfsmitteln, was zu einer raschen Verminderung des Trübendurchsatzes führt. Da aufgrund der erläuterten Konstruktion auch das Öffnen der Filterpresse und Entfernen der sich auf den Filterhilfsmitteln aufbauenden Filterkuchen kompliziert und zeitaufwendig ist, ergibt sich insgesamt eine nur geringe Leistungsfähigkeit dieser Filterpresse.

Zum Stand der Technik gemäß Art. 54(3) EPÜ gehört ferner eine Filterpresse, die in der EP-A 0 178 389 beschrieben ist. Diese enthält mehrere axial hintereinander angeordnete Filtereinheiten, jeweils bestehend aus einem Filterrahmen und einer dieser gegenüberstehenden plattenförmigen Rotorscheibe, die an einer die Filterpresse durchsetzenden Hohlwelle drehfest angebracht ist. Der Filterrahmen enthält einen Hohlraum, der auf der der Rotorscheibe gegenüberstehenden Seite durch ein Filterhilfsmittel in Fom einer Lochplatte, eines Filtertuches oder dgl. abgedeckt ist, das ggf. durch Rippen im vorgenannten Hohlraum abgestützt sein kann. Aus dem Hohlraum, der das Filtrat aufnimmt, führt ein im wesentlichen radial verlaufender Kanal in eine am Filterrahmen ausgebildete Umfangsnut. Beiderseits dieser Umfangsnut ist der Rahmen mittels 0-Ringen an einem sämtliche Filtereinheiten umgebenden Gehäusemantel abgedichtet, aus dem Filtratauslässe ins Freie führen. Diese Dichtungen sind notwendig, um den Filtratauslaß einer Filtereinheit gegen die Trübenkammer der benachbarten Filtereinheit abzudichten. Im Betrieb wird in die Trübenkammern die zu filtrierende Trübe eingegeben, mittels der Rotorscheiben darin verteilt, wobei die Rotorscheiben durch langsame Drehung für einen gleichmäßigen Aufbau der Filterkuchen auf den Filtrathilfsmitteln sorgen. Nach Erzielung einer ausreichenden Filterkuchendicke werden die Filterkuchen mit Hilfe der Rotorscheiben ausgepreßt, um sie bestmöglich zu entwässern.

Zum Entfernen der Filterkuchen aus der Filterpresse wird der Gehäusemantel in Axialrichtung von den Trübenkammern abgezogen, sodaß die Filterkuchen in radialer Richtung aus der Filterpresse ausgeräumt werden können. Dies erfolgt mit Unterstützung durch die Rotorscheiben, die eine Räumrippe aufweisen und in Drehbewegung versetzt werden.

Obgleich mit dieser Filterpresse gegenüber vorbekannten Kammerfilterpressen eine erhebliche Leistungssteigerung erzielbar ist, insbesondere weil sie einen gleichmäßigen Filterkuchenaufbau und eine sehr schnelle Abreinigung ermöglicht, läßt diese Filterpresse doch noch einige Wünsche offen. So müssen beispielsweise die genannten Dichtungen, die die Filtratkammern gegen die Trübenkammern abdichten, einer relativ hohen Druckdifferenz widerstehen. Weiterhin erfolgt beim Öffnen der Filterpresse eine abziehende Bewegung über die Vielzahl der vorhandenen Dichtungen, was nicht nur für diese Dichtungen schädlich ist, sondern auch einen erheblichen Kraftaufwand erfordert. Besonders nachteilig ist, daß die Dichtungen beim Abreinigen der Filterpresse mit den Filterrückständen in Berührung kommen und daher am Ende der Entleerung der Filterpresse besonders sorgfältig gereinigt werden müssen, damit sie beim Wiederschließen des Filterpressengehäuses nicht beschädigt werden und nach dem Schließen die Dichtungsfunktion sicherstellen. Es versteht sich, daß aus dem gleichen Grunde auch der Gehäusemantel vor dem Wiederschließen sorgfältig gereinigt werden muß. Da die Dichtungsflächen innerhalb des Gehäusemantels liegen, ist eine entsprechende Überprüfung der Sauberkeit nicht einfach. Durch diese beim Entleeren und Reinigen der Filterpresse erforderlicher Sorgfalt wird ein Teil der von der Filterpresse erzielten Vorteile wieder aufgezehrt.

Der Erfindung liegt die Aufgabe zugrunde, eine Filterpresse der eingangs genannten Art anzugeben, die eine hohe Leistungsfähigkeit aufweist und insbesondere eine schnelle Entfernung der Filterkuchen zuläßt sowie eine besondere Reinigung vor dem Wiederschließen des Gehäuses entbehrlich macht.

Diese Aufgabe wird durch die kennzeichnenden Merkmale des Patentanspruchs 1 gelöst. Vorteilhafte Ausgestaltungen der Erfindung sowie Rotoren, die besonders zur Verwendung in der Filterpresse geeignet sind, sind Gegenstand weiterer Ansprüche.

Die Erfindung vermeidet Dichtungen zwischen den einzelnen Filtereinheiten, sowie zwischen diesen und dem beweglichen Gehäusemantel. Demnach sind die Trübenkammern der einzelnen Filtereinheiten innerhalb des Gehäuses miteinander verbunden, die Filtratkammern sind an eine gemeinsame Rohrleitung angeschlossen, die das Gehäuse durchsetzt. Der verschiebbar gelagerte Gehäusemantel ist gegenüber den einzelnen Filterkammern überhaupt nicht abgedichtet, er ist lediglich nach außenhin abgedichtet, wobei es unschwierig möglich ist, diese Dichtungen fern von jenem Bereich anzuordnen, der durch Filtratrückstände verunreinigt werden kann. In jedem Falle sind die Dichtungsflächen leicht zugänglich und können daher leicht auf Sauberkeit überprüft werden.

Da zwischen den einzelnen Filtereinheiten und der Innenwand des Gehäusemantels auch in geschlossenem Zustand des Filtergehäuses ein freier Spalt verbleibt, ist es völlig unschädlich, wenn nach der Entleerung der Filterpresse an den Filtereinheiten oder der diesen gegenüberstehenden Innenseite des Gehäusemantels Verunreinigungen zurückgeblieben sein sollten. Der Entleerungs- und Abreinigungsvorgang der Filterpresse kann daher mit wesentlich geringerer Sorgfalt ausgeführt werden, als bei jeder vorbekannten Filterpresse.

In der vorgenannten EP-A 0 178 389 ist auch ein Rotor beschreiben, dessen Rotorscheiben beidseitig flexible Membranen tragen, die zusammen mit der Rotorscheibe einen Hohlraum abschließen, der mit der Bohrung der Hohlwelle verbunden ist und von dort von einem Druckfluid beaufschlagt werden kann, um die Membran gegen den Filterkuchen zu drücken und diesen auszupressen. Solche Membranen sind empfindliche Bauteile und können daher leicht beschädigt werden. Von der vorliegenden Erfindung wird daher auch ein verbesserter Rotor angegeben, der eine größere Steifigkeit aufweist, billig herzustellen ist und eine große Standfestigkeit aufweist. Ein solcher Rotor ist insbesondere bei der hier beschriebenen Filterpresse einsetzbar. Die Erfindung wird nachfolgend unter Bezugnahme auf die Zeichnungen näher erläutert. Es zeigt:

Fig. 1 eine Filterpresse mit den Merkmalen der Erfindung in geschlossenem Zustand des Gehäuses (A) und in geöffnetem Zustand des Gehäuses (B);

Fig. 2 die Presse nach Fig. 1, teilweise geschnitten, zur Erläuterung der Antriebe;

Fig. 3 eine Einzelheit aus Fig. 2 in vergrößertem Maßstab;

Fig. 4 einen Schnitt durch die Filterpresse gemäß einer ersten Ausführungsform längs der Linie A–A von Fig. 2, in größerem Maßstab;

Fig. 5 einen Schnitt durch die Filterpresse gemäß einer zweiten Ausführungsform längs der Linie B–B von Fig. 2, in größerem Maßstab;

Fig. 6 einen Längsschnitt durch eine Rotorscheibe;

Fig. 7 eine Einzelheit aus Fig. 6 in größerem Maßstab;

Fig. 8 eine Ausführungsform einer wellenseitigen Dichtungsanordnung der Rotorscheibe, und

Fig. 9 eine Draufsicht auf eine Rotorscheibe.

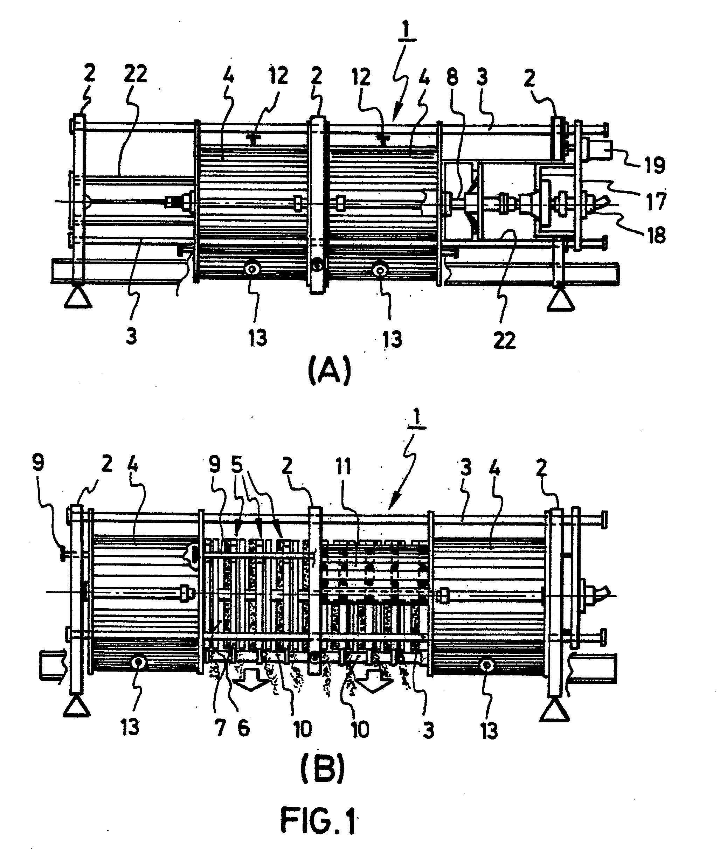

Fig. 1 zeigt eine Filterpresse in Tandemausführung in stark schematisierter Darstellung, die für den Einsatz der Erfindung geeignet ist. Die Filterpresse 1 besteht aus einem Gestell aus im Abstand zueinander parallel angeordneten Tragplatten 2, die durch Schienen 3 miteinander verbunden sind. Auf den Schienen 3 sind zwei Gehäusemäntel 4 im wesentlichen zylindrischer Gestalt längsverschiebbar geführt, die zu beiden Seiten der mittleren Tragplatte 2 angeordnet sind.

In dem von den Gehäusemänteln 4 im geschlossenen Zustand umgrenzten Raum sind mehrere Filtereinheiten 5 axial hintereinander angeordnet, bestehend jeweils aus einem Filterrahmen 6 und einer zugehörigen Rotorscheibe 7. Die Rotorscheiben 7 sind auf einer gemeinsamen Welle 8 drehfest angeordnet, die die gesamte Filterpresse 1 durchsetzt. Die Filterrahmen 6 sind, von den Gehäusemänteln unabhängig, an den Tragplatten 2 abgestützt. Hierzu werden von der Erfindung zwei verschiedene, vorteilhafte Ausführungsformen angegeben, die später noch erläutert werden sollen.

Die Gehäusemäntel 4 sind im oberen Bereich jeweils mit wenigstens einer Öffnung 12 versehen, die Einlaß und Auslaß sein kann. Im unteren Bereich weist jeder Gehäusemantel 4 wenigstens einen Anschluß 13 auf, dessen Bedeutung später noch zu erläutern ist.

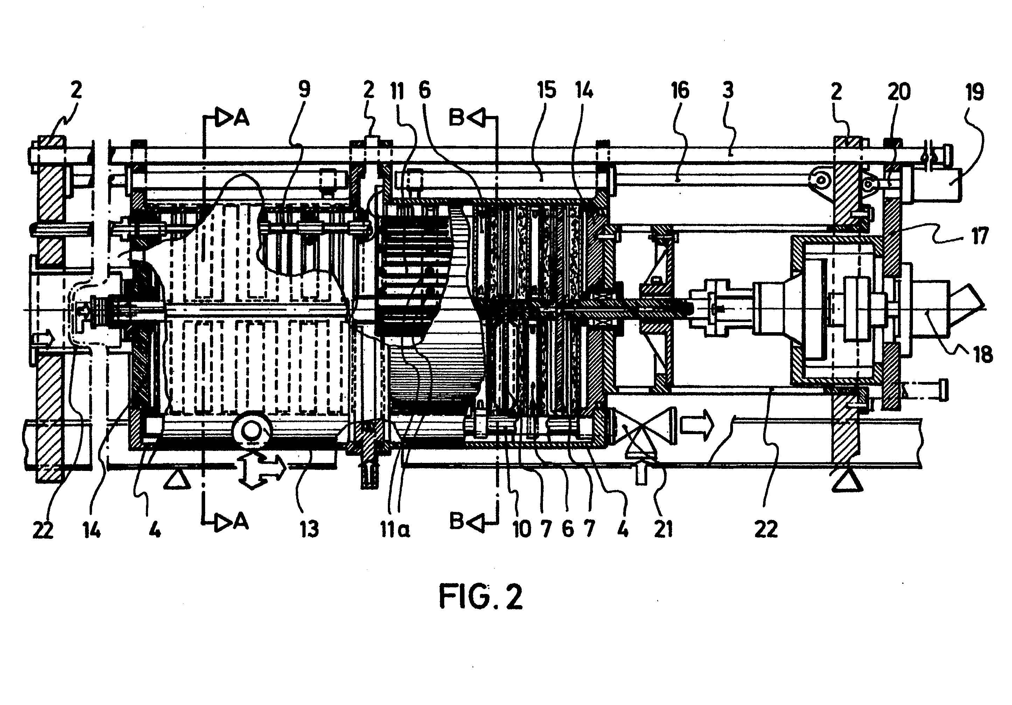

Die beiden die Trübe aufnehmenden Kammern zur linken und zur rechten Seite der mittleren Tragplatte 2 sind in der Praxis im wesentlichen gleichartig aufgebaut, die Figuren 1 (B) und 2 zeigen hier jedoch zwei unterschiedliche Arten der Abstützung der Filterrahmen 6.

Wie sich aus der Schnittzeichnung nach Fig. 2 entnehmen läßt, ist jede der Kammern stirnseitig einerseits von der mittleren Tragplatte 2 und andererseits von einer Stirnwand 14 begrenzt. Die Stirnwände 14 sind axial mit den Tragplatten 2 verbunden und von diesen getragen. Einzelheiten werden noch erläutert. Ihr Abstand von den äußeren Tragplatten 2 entspricht jeweils etwa der axialen Länge eines Gehäusemantels 4, damit durch axiales Verschieben die zugehörige Trübenkammer völlig freigelegt werden kann, wie sich aus Fig. 1 (B) entnehmen läßt.

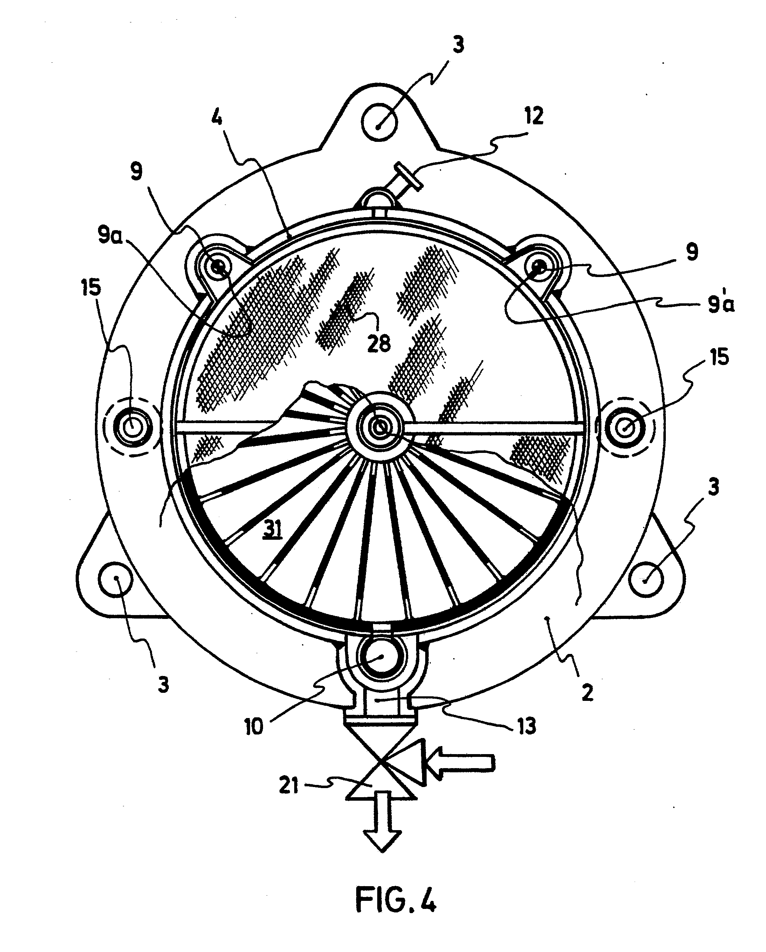

Wie schon erwähnt, kommen für die Abstützung der Filterrahmen 6 an den Tragplatten 2 zwei verschiedene Ausführungsformen in Betracht. Die eine Ausführungsform ist in Fig. 1 (B) und in Fig 2 am Beispiel der linken Filterkammer und in Fig. 4 gezeigt.

Gemäß diesem Beispiel durchsetzen die Trübenkammer zwei axial verlaufende Stangen 9, die sowohl an den Tragplatten 2 als auch an den Stirnwänden 14 befestigt sind und die die Stirnwände 14 in ihrer axialen Position festlegen und die Filterrahmen 6 halten, die zu diesem Zweck mit passenden Vorsprüngen versehen sind. Von unten sind die Filterrahmen 6 außerdem von einem die Trübenkammern axial durchsetzenden Rohr 10 abgestützt, das seinerseits wenigstens in der mittleren Tragplatte 2 abgestützt ist. Die Stangen 9 und das Rohr 10 sind zweckmäßigerweise gleichmäßig um den Umfang der Filterrahmen 6 verteilt angeordnet, wie Fig. 4 zeigt.

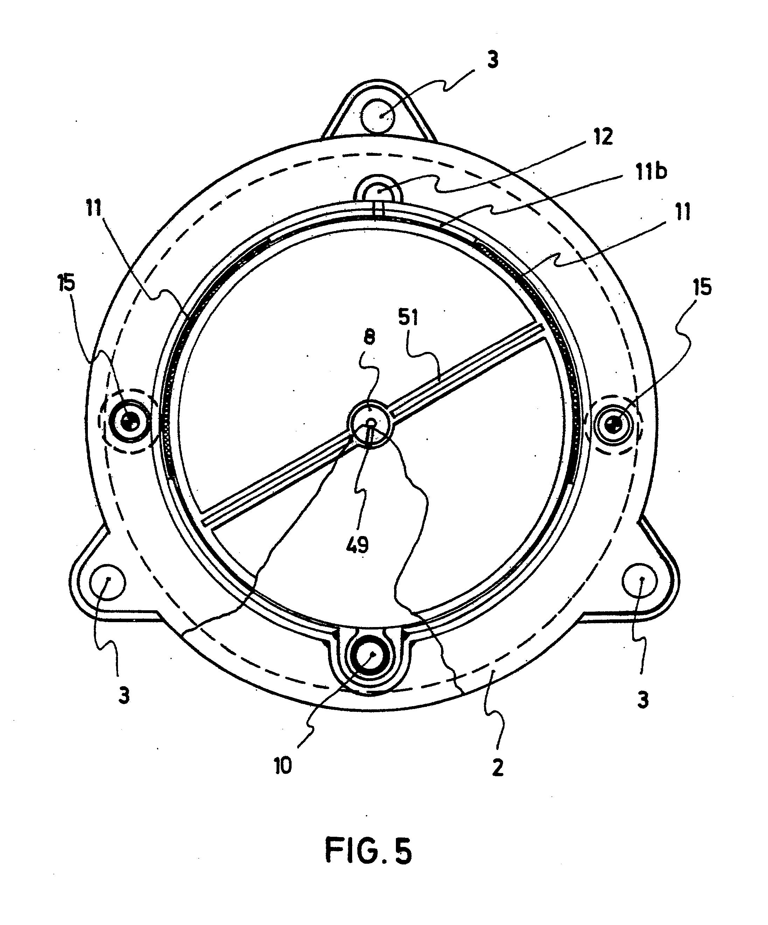

Die andere Ausführungsform ist in Fig. 1 (B) und in Fig. 2 am Beispiel der rechten Trübenkammer und in Fig. 5 gezeigt.

Gemäß diesem Beispiel sind die mittlere Tragplatte 2 und die Stirnwände 14 mittels Stützzargen 11 im oberen Umfangsberich der Filterrahmen 6 miteinander verbunden. Die Stangen 9 fehlen. Diese Stützzargen 11 sind im Querschnitt etwa viertelkreisförmig und zu beiden Seiten des oberen Scheitelpunktes der Filterrahmen 6 an der mittleren Tragplatte 2 und den Stirnwänden 14 befestigt und überdecken so die Trübenkammern im oberen Bereich bis etwas unter die Mitte, wie aus Fig. 5 anschaulich hervorgeht.

Die Stützzargen sind Platten aus Metall, Blech oder Kunststoff. An ihnen sind die Filterrahmen 6 in deren oberen Bereich mittles Schraubbolzen 11a befestigt. Außerdem sind die Filterrahmen 6 von unten durch das schon erwähnte Rohr 10 abgestützt.

Während, wie schon erwähnt, bei der ersten Ausführungsform die Stirnwand 14 nicht nur durch das Rohr 10 sondern auch durch die Stangen 9 an dem äußeren Tragrahmen 2 abgestützt ist, übernimmt die Funktion der Stangen 9 bei der zweiten Ausführungsform ein Rahmen 22, der käfigartig oder tubusförmig ausgeführt ist und die Stirnwand 14 mit der äußeren Tragplatte 2 verbindet und mit diesen Bauteilen verschraubt ist. Wie in Fig. 2 rechts zu erkennen ist, stützt der Käfigrahmen 22 zugleich auch ein Lager für die Welle 8 ab.

Die Unterteilung der Tragkonstruktion in der Trübenkammer in zwei Stützzargen 11 hat den Vorteil, daß bei Wartungsarbeiten eine der Stützzargen abgenommen werden kann und die andere dann die Filterrahmen noch hält.

Zur Vermeidung von Schmutzansätzen im Raum zwischen den Stützzargen an den tragenden Platten 2 bzw. 14 ist es günstig, wenn dieser durch einen streifenförmigen Füllkörper 11b (siehe Fig. 5) ausgefüllt ist.

Mit Hilfe jeweils einer Hydraulikeinheit, von der im Beispiel der Zylinder 15 und die Kolbenstange 16 zu erkennen sind, ist jeder Gehäusemantel 4 axial verschiebbar. Im dargestellten Beispiel ist der Zylinder 15 am Gehäusemantel 4 befestigt, während die Kolbenstange 16 an der äußeren Tragplatte 2 befestigt ist.

Auf den Schienen 3 ist axial verschiebbar eine Montageplatte 17 geführt, an der eine Antriebseinheit 18 für die Drehung der Welle 8 befestigt ist. Die Montageplatte 17 ist mit der rechten Tragplatte 2 mittels einer Hydraulikeinheit verbunden, von der in Fig. 2 der Zylinder 19 und die Kolbenstange 20 zu erkennen sind. Der Zylinder 19 ist an der Montageplatte 17 befestigt, während die Kolbenstange 20 an der rechten Tragplatte 2 befestigt ist. Mit Hilfe dieser Hydraulikeinheit sind die Montageplatte 17 und über sie und den Antrieb 18 und die Welle 8 die Rotorscheiben 7 axial versetzbar.

Wie in Fig. 2 dargestellt, können die Stangen 9 als Rohre ausgebildet sein, die in den Zwischenräumen zwischen den Rotorscheiben 7 und den Filterrahmen Öffnungen 9a aufweisen, sodaß sie als Zuführeinrichtungen für zu filternde Trübe, für Spülwasser, Preßluft od. dgl. dienen können.

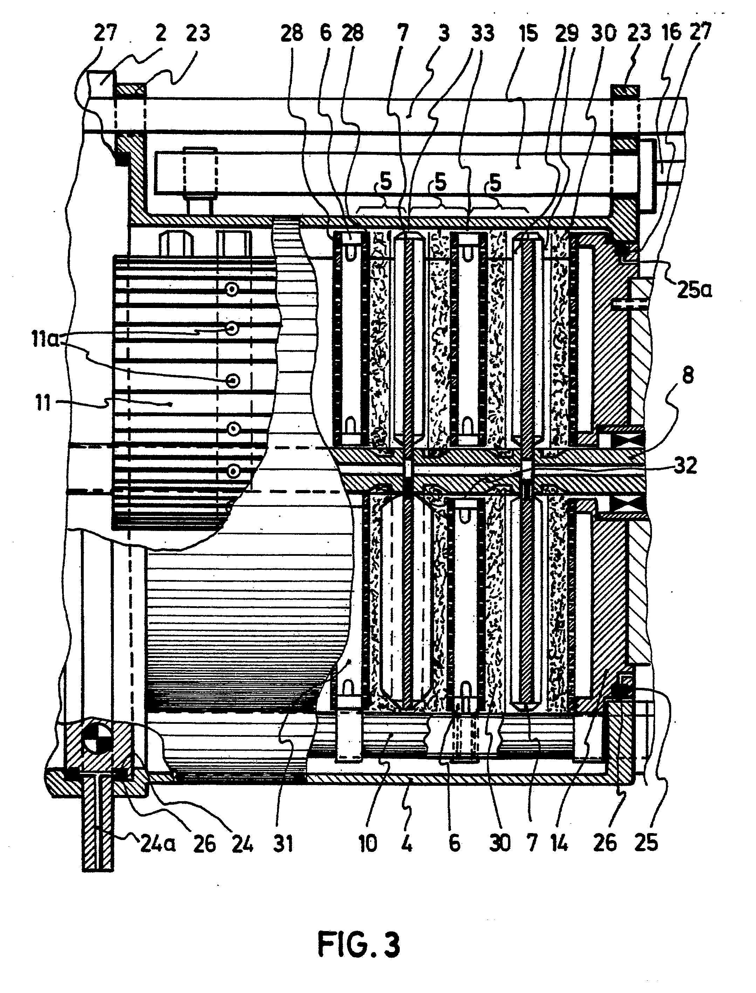

Der Aufbau einer Trübenkammer geht deutlicher aus Fig. 3 hervor. Eine Trübenkammer ist stirnseitig auf der einen Seite von der mittleren Tragplatte 2 und auf der anderen Seite von einer Stirnwand 14 begrenzt. Sie ist nach außen durch den im wesentlichen tubusförmigen Gehäusemantel 4 abgeschlossen, der mittels Tragösen 23, in denen Bohrungen ausgebildet sind, auf den Führungsstangen 3 geführt ist. In den Zeichnungen ist nur eine der Führungsstangen 3 zu erkennen, es sei jedoch betont, daß mehrere solcher Führungsstangen vorhanden sind, vorzugsweise drei Führungsstangen, die im Winkel gleichmäßig verteilt um die Filterpresse angeordnet sind.

Die mittlere Tragplatte 2 und die rechte Stirnwand 14 weisen auf ihrem Umfang jeweils eine Ringnut 24 bzw. 25 auf, in denen ein dichtender O-Ring 26 angeordnet ist. Der Gehäusemantel 4 weist an seinen Enden bearbeitete Dichtungsflächen 27 auf, die mit den O-Ringen 26 zusammenwirken. Aus Fig. 3 ist deutlich ersichtlich, daß die O-Ringe und die Dichtungsflächen 27 in geöffnetem Zustand der Trübenkammer im wesentlichen außerhalb des Einflußbereiches der Filterkammer sind.

Die Ringnuten 24 und 25 haben vorzugsweise einen sich in Richtung auf ihre freie Seite verengenden, schwalbenschwanzförmigen Querschnitt und die Ringdichtungen 26 liegen jeweils an ihren Seitenwänden an. Die von der Ringdichtung und den Seitenwänden sowie der Bodenwand einer jeden Ringnut 24 bzw. 25 gebildeten Kammer ist mit einem nach außen führenden Verbindungkanal 24a bzw. 25a versehen, durch den in die Kammer ein Druckfluid, insbesondere Preßluft eingeführt werden kann. Es ist mit dieser Konstruktion möglich, auf eine paßgenaue Bearbeitung der Dichtungsflächen an den Gehäusemänteln 4 und der mittleren Stützplatte 2 sowie den Stirnwänden 14 zu verzichten. Es kann ein gewisses Spiel zwischen diesen Flächen herrschen, sodaß beim Schließen und Öffnen der Trübenkammern jegliche Reibung an den Dichtungen vermieden wird. Die Dichtungsfunktion wird durch Beaufschlagung der Dichtungskammern mit Preßluft sichergestellt, die die Dichtungsringe 26 an die Dichtungsfläche des jeweiligen Gehäusemantels 4 in Auflage bringt. Alternativ können die Dichtungsringe 26 Blähkörperdichtungen sein, die durch Preßluft od. dgl. aufblähbar sind.

Jede Filtereinheit 5 besteht gemäß Fig. 3 aus einem Filterrahmen 6 und einer Rotorscheibe 7. Im dargestellten Beispiel sind diese Einheiten jeweils symmetrisch ausgeführt, d.h. jeder Filterrahmen 6 trägt auf beiden Seiten ein Filterhilfsmittel 28, beispielsweise in Form einer perforierten Platte oder eines Tuches, und jede Rotorscheibe 7 ist beiderseits mit Preßflächen 29 versehen. Der sich zwischen den Filterhilfsmitteln 28 und den Preßflächen 29 aufbauende Filterkuchen ist in Fig. 3 mit 30 bezeichnet. Die von den Filterhilfmitteln 28 eingeschlossenen Filtratkammern 31 sind an das Rohr 10 angeschlossen, wie im unteren Bereich der Fig. 3 gezeigt. Die Rotorscheiben sind hohl. Ihr Innenraum ist jeweils mit der Bohrung der hohl ausgeführten Welle 8 verbunden. Hierauf wird später noch eingegangen werden. Das Rohr 10 dient hauptsächlich als Auslaßrohr und ist mit einem Dreiwegeventil 21 versehen, durch das das Filtrat abgelassen werden kann, über das aber auch eine Rückspülung mit einer Spülflüssigkeit möglich ist.

Im dargestellten Ausführungsbeispiel durchdringt das Rohr 10 auf der einen Seite der Filterpresse auch eine der Stirnwände 14, wo das Dreiwegeventil eingezeichnet ist. Wenn man den Zugang zu dem Rohr 10 in der mittleren Tragplatte 2 vorzieht, kann auf jene Durchdringung verzichtet werden, sodaß im dargestellten Beispiel diesbezüglich die rechte Trübenkammer wie die linke ausgeführt ist.

Wie aus Fig. 3 zu entnehmen ist, befinden sich zwischen den Filterrahmen 6 und der Welle 8 keinerlei Dichtungen, vielmehr ist dort ein Spalt 32 erkennbar. Ebenso fehlen auch jegliche Dichtungen zwischen den Rotorscheiben 7 und den Filterrahmen 6 einerseits und dem Gehäusemantel 4 andererseits. Auch dort ist wenigstens jeweils ein Spalt 33 erkennbar, ganz abgesehen von den größeren Zwischenräumen im Bereich des Auslaßrohres 10, wie unten in Fig. 3 gezeigt. Sobald daher der Gehäusemantel 4 von den O-Ringen 26 und der mittleren Tragplatte 2 bzw. der Stirnwand 14 axial abgezogen ist, bzw. sobald der Dichtungsdruck infolge Entlüftung der Dichtungskammern gelöst ist, kann er frei über die Rotorscheiben und Filterrahmen gleiten und bleibt wegen des vorhandenen Zwischenraumes auch unbeeinflußt von dort etwa niedergeschlagenen Verunreinigungen.

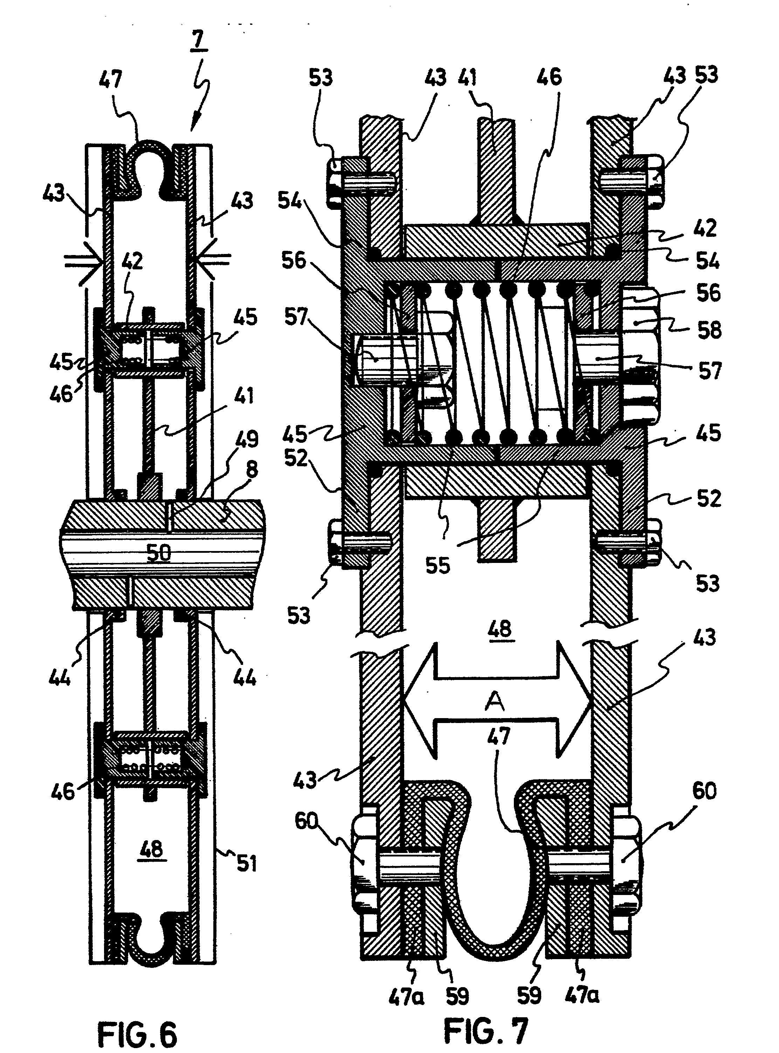

Ein bevorzugter Aufbau einer Rotorscheibe ist in Fig. 6 dargestellt. Sie besteht aus einer Nabenscheibe 41, die drehfest auf der hohl ausgeführten Welle 8 befestigt ist, beispielsweise durch Verschweißung oder mittels eines Nutkeiles. Die Nabenscheibe 41 trägt extentrisch mehrere Führungsbüchsen 42, die sich parallel zur Welle 8 erstrekken und an der Nabenscheibe 42 angeschweißt sind. Weiterhin umfaßt die Rotorscheibe 7 zwei steife kreisförmige Platten 43, die beiderseits der Nabenscheibe 41 angeordnet sind und die die eigentlichen Preßflächen der Rotorscheibe bilden. Die Platten 43 sind axial verschiebbar auf der Welle 8 geführt und an der Welle mittels O-Ringdichtungen 44 abgedichtet, die in entsprechenden Ringnuten in den Platten 43 sitzen.

Die Platten 43 sind gegen Verdrehung gegenüber der Welle durch hülsenförmige Führungszapfen 45 gesichert, die durch entsprechende Bohrungen in den Platten 43 in die Führungsbüchsen 42 eingesteckt sind.

Wie später noch zu erläutern sein wird, werden die beiden Platten 43 einer Rotorscheibe 7 durch Zugfedern 46 gegeneinandergezogen. An ihrem äußeren Umfang sind die beiden Platten 43 mittels einer flexiblen, ringförmigen Dichtung 47 von im wesentlichen U- oder Ω-förmigen Querschnitt miteinander verbunden. Die äußeren Schenkel dieser Dichtung 47 sind an den Innenseiten der Platten 43 befestigt. Der von den Platten 43, der Dichtung 47 und der Welle 8 umschlossene Hohlraum 48 steht über wenigstens eine in der Welle 8 ausgebildeten Bohrung 49 mit der Axialbohrung 50 der Hohlwelle 8 in Verbindung. Infolgedessen ist durch Zuführung eines Druckfluides durch die Hohlwelle 8 und die Querbohrung 49 in den Hohlraum 48 der Abstand der beiden Platten 43 gegen die Kraft der Federn 46 vergrößerbar.

Jede der Platten ist an ihrer Außenseite, die die Preßfläche bildet, mit wenigstens einer axial vorstehenden Rippe 51 versehen, die sich vom inneren bis zum äußeren Rand der Platte 43 erstreckt.

Aus Fig. 7 sind Einzelheiten der Konstruktion nach Fig. 6 erkennbar. Die Führungshülsen 45, die die Platten 43 drehfest an der Führungsbüchse 42 und somit an der Nabenscheibe 41 festhalten, weisen an ihrem äußeren Ende jeweils einen Flanschring 52 auf, der mittels Schrauben 53 an der zugehörigen Rotorplatte 43 festgelegt ist. Eine O-Ring-Dichtung 54 im Bereich der Kehle zwischen dem Flanschring 52 und dem zylindrischen Abschnitt 55 der Führungshülse 45 dichtet den Hohlraum 48 nach außen ab. Die Zugfeder 46 ist innerhalb des von den Hülsen 45 umschlossenen Raumes angeordnet und auf einer Seite mittels einer Scheibe 56 und einer Schraube 57 an dem Flansch 52 der einen Führungshülse befestigt. Im Bereich des anderen Endes ist die Feder 46 mittels einer ebensolchen Scheibe 56, einer Schraube 57 und einer auf deren nach außen ragendes Ende aufgeschraubten Mutter 58 befestigt, mit deren Hilfe zugleich auch die Spannung der Zugfeder 46 eingestellt werden kann.

Die Dichtung 47 weist im Querschnitt gesehen beiderseits des U-förmigen Abschnitts etwa parallel zu dessen Schenkeln verlaufende Außenschenkel 47a auf, die jeweils zwischen einem Ring 49 und der Innenseite der Rotorplatte 43 durch Schraubbolzen 60 dicht eingespannt sind. Bei Beaufschlagung des Hohlraumes 48 durch ein Druckfluid spreizen sich die beiden Platten 43 in Richtung des Pfeiles A auseinander, wobei sich die im Querschnitt U-förmige Dichtung 47 in entsprechender Weise ausfaltet. Wird der Druck aus dem Hohlraum 48 wieder abgelassen, ziehen die Zugfedern 46 die beiden Platten wieder zueinander, bis sie an den Stirnseiten der Führungsbüchsen 42 anliegen.

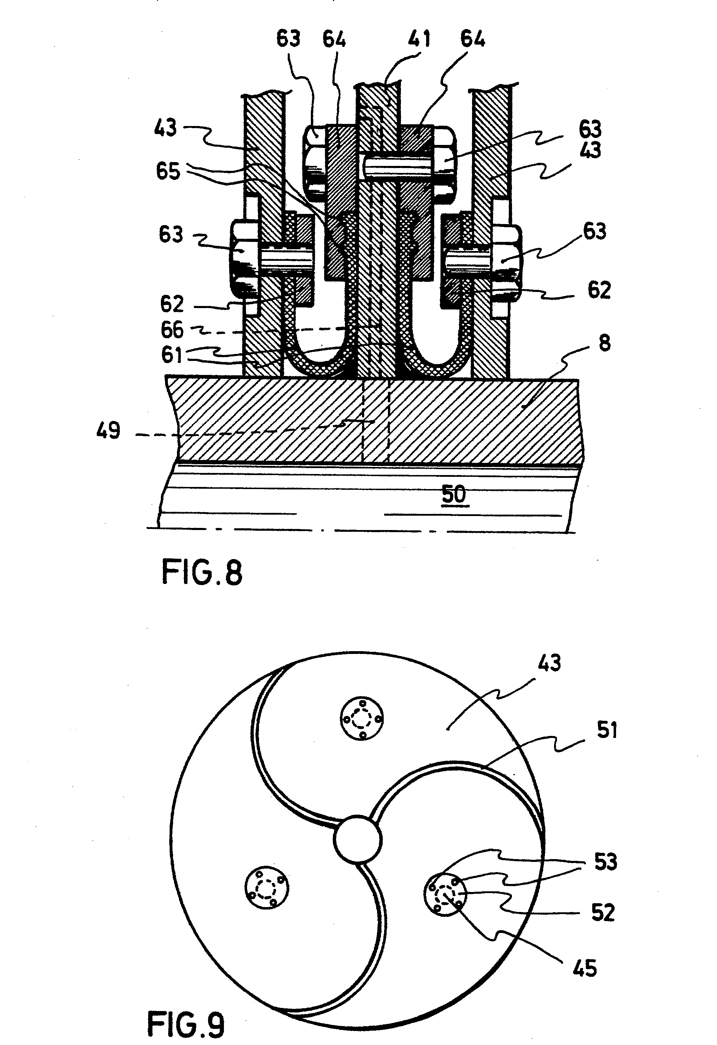

Zeigte Fig. 6 eine Ausführungsform, bei der der Hohlraum 48 zwischen den Platten 43 wellenseitig mittels O-Ringen 44 gegen die Welle 8 abgedichtet war, so zeigt Fig. 8 eine Ausführungsform, bei der die wellenseitige Abdichtung mit einer Anordnung erfolgt, die jener der äußeren Umfangsdichtung 47 nach Fig. 7 vergleichbar ist. Hier ist zwischen der Nabenscheibe 41 und jeder der Platten 43 ein elastischer Dichtungsring 61 von U-förmigen Querschnitt angeordnet, der an der Platte 43 mittels einer ringförmigen Scheibe 62 und durch die Platte 43 geschraubte Schrauben 63 verspannt ist und an der Nabenscheibe 41 mittels passender ringförmiger Scheiben 64 und Schrauben 63 verspannt ist. Ringförmige Wulste 65 und entsprechende rillenförmige Vertiefungen in den Scheiben 64 können die Montage erleichtern und die Dichtungsfunktion verbessern. Eine solche Anordnung ist besonders vorteilhaft, da sie auf Verschmutzung an der Welle weitestgehend unempfindlich ist. Der Zugang von der Bohrung 50 der Welle 8 in den Hohlraum 48 zwischen den Platten 43 erfolgt bei dieser Ausführungsform durch die schon erwähnte Querbohrung 49 in der Wand der Welle 8 sowie durch eine sich daran anschließende Bohrung 66 in der Nabenscheibe 41.

Als Material für die Dichtungen 47 und 61 U-förmigen Querschnitts kommt vorteilhaft gewebeverstärktes Gummi- oder Kunststoff-Material in Betracht. Solche Materialien können bei geeigneter Dimensionierung bei Aufrechterhaltung hoher Flexibilität ohne weiteres den Betriebsdrücken, die in der Größenordnung bis zu 2 MPa liegen können, widerstehen, ohne Schaden zu leiden. Die jeweilige Auswahl des Materials richtet sich selbstverständlich auch nach der Art der zu verarbeitenden Trübe, da diese Dichtungen dem Einfluß der Trüben direkt ausgesetzt sind.

Fig. 9 zeigt eine Rotorscheibe in Draufsicht. Man erkennt eine Platte 43 mit drei gleichmäßig darauf verteilten Führungshülsen 45, deren Flanschringe 52 mit Schrauben 53 an der Rotorplatte 43 befestigt sind. Etwa von der Mitte der Platte 43 bis zum Rand verlaufen in gleichmäßiger Verteilung drei Rippen 51. Diese verlaufen bogenförmig, sodaß bei einem Antrieb im Gegenuhrzeigersinn für die dargestellte Ausführungsform eine Förderbewegung nach außen durch diese Rippen hervorgerufen wird. In der Praxis sind diese Rippen etwa 10 mm hoch und sind ausreichend, um den Filterrückstand von dem Filterhilfsmittel auf der Filterplatte abzuräumen. Die von den Führungshülsen 45 umschlossenen, in der Fig. 9 nicht erkennbaren Zugfedern erzeugen bei der dargestellten Anordnung beim Ablassen des Druckfluides aus dem Hohlraum der Rotorscheibe 7 einen gleichmäßigen Zug, der zu einer Rückführung der Platten 43 in ihre Ruhelage führt.

Gemäß einer weiteren, in der Zeichnung nicht dargestellten Ausführungsform einer Rotorscheibe besteht diese aus einer mit der hohl ausgeführten Welle drehfest verbundenen Nabenscheibe, die wie die Nabenscheibe 41 nach Fig. 6 ausgeführt ist. Anstelle der Führungsbüchsen 42 trägt die Nabenscheibe hydraulische oder pneumatische Kolben/Zylinder-Einheiten, die an der Nabenscheibe schwimmend gelagert sind. Zu beiden Seiten der Nabenscheibe erstrecken sich steife, kreisförmige Platten, die den Platten 43 nach Fig. 6 vergleichbar sind. Von Kolben/Zylinder-Einheiten sind die Kolben mit der einen Platte und die Zylinder mit der anderen Platte verbunden. Da die Kolben/Zylinder-Einheiten die Drehbewegung der Nabenscheibe auf die Platten übertragen, müssen sie entsprechend steif in Richtung quer zu ihrer Längserstreckung ausgeführt sein. Die Platten sind an ihrem äußeren Umfang mittels einer Dichtung miteinander verbunden, die der Dichtung 47 nach Fig. 6 entspricht, die jedoch keine so hohe Druckfestigkeit aufzuweisen braucht, wie die Dichtung beim Ausführungsbeispiel nach Fig. 6, da sie lediglich dazu bestimmt ist, das Eindringen von Trübe in den Raum zwischen den Platten zu verhindern. Alternativ können die Platten an ihren Umfangsrändern gegeneinandergerichtete, axial verlaufende Flanschringe aufweisen, die ineinandergreifen und aneinander abgedichtet sind.

Als Kolben/Zylinder-Einheiten werden vorteilhaft doppelt wirkende Einheiten verwendet, bei denen zu beiden Seiten des Kolbens liegende Zylinderkammern alternativ mit einem Druckfluid beaufschlagt werden können. Es ist dann möglich, durch Beaufschlagung der einen Kammern die Platten voneinander wegzubewegen und durch Beaufschlagung der anderen Kammern mit dem Druckfluid die Platten einander anzunähern. Zu diesem Zweck sind längs der Welle zwei Anschlußleitungen zu verlegen oder es ist mittels Ventilmechanismen in den Rotorplatten eine Umsteuerung des Betätigungsfluides in die unterschiedlichen Zylinderkammern vorzunehmen.

Es ist aber auch möglich, nur einfachwirkende Kolben/Zylinder-Einheiten zu verwenden und die Rückführung der Platten in ihre Ruhelage durch Federn zu bewirken. Alternativ käme auch in Betracht, die Zylinderkammern der einfachwirkenden Kolben-Zylinder-Einheiten mit Unterdruck zu beaufschlagen, um eine Annäherung der Platten zu erreichen. Es versteht sich, daß für die Zuführung des Betätigungsfluides am Ende der Welle entsprechende Drehkupplungen vorhanden sein müssen.

Die Betriebsweise der Filterpresse nach der Erfindung wird nachfolgend erläutert. Vor Beginn des Filtervorganges werden die Trübenkammern durch Verschieben der Gehäusemäntel 4 auf die mittlere Tragplatte 2 der Filterpresse geschlossen. Es wird dann kontinuierlich durch die Anschlüsse 13 zu filternde Trübe in die Trübenkammern eingeführt. Die Trübe erfüllt völlig die Trübenkammern. Etwa mit der Trübe mitgeführte gasförmige oder flüchtige Anteile werden durch die Öffnungen 12 abgezogen. Das Filtrat läuft durch die Filterhilfsmittel 28 in die dahinterliegenden Filtratkammern und von dort in das Auslaufrohr 10 ab. Während des Trübenzulaufs wird mit Hilfe des Antriebes 18 die Welle 8 in eine langsame Bewegung versetzt, die ggf. auch reversiert werden kann, womit die Trübe in der Trübenkammer in Bewegung gehalten wird, womit ein vorzeitiges Zusetzen der Filterhilfsmittel 28 verhindert und mit fortschreitendem Filterzyklus für einen gleichmäßigen Niederschlag der Filterrückstände auf den Filterhilfsmitteln gesorgt wird. Dabei kann die Welle 8 mit Hilfe der Hydraulikeinheit 19, 20 in eine hin und hergehende Bewegung, vorzugsweise mit allmählich abnehmender Amplitude, versetzt werden, um den Filterrückstand entsprechend seinem Aufbau auf dem Filterhilfsmittel gleichmässig zu bearbeiten, d.h. durchzukneten. Hat sich auf den Filterhilfsmitteln genügend Filterrückstand (sog. Filterkuchen) angesammelt, wird die weitere Trübenzufuhr abgebrochen und die Welle 8 angehalten. Es wird dann über die Welle 8 den Rotorscheiben 7 ein Druckfluid zugeführt, beispielsweise Wasser oder ein Hydrauliköl, das die Scheiben 43 gegen die Kraft der Federn 46 auseinander und gegen die Filterkuchen auf den Filterhilfsmitteln drückt, um diese weiter zu entwässern. Die in der Filterkammer zurückbleibende Trübe wird dann durch den Anschluß 13 abgezogen und steht für den nächsten Filterzyklus zur Verfügung.

Sodann wird das Druckfluid aus den Rotorscheiben 7 abgelassen. Es kann nun, sofern erwünscht, durch die rohrförmigen Stangen 9 Preßluft in die Trübenkammern eingeblasen werden, um die Filterkuchen weiter zu trocknen. Die Preßluft drückt zugleich den Schlamm aus den Trübenkammern, sofern er noch nicht vollständig aus den Anschlüssen 13 abgelaufen ist. Es wird dadurch vermieden, daß der trockene Filterkuchen beim Abreinigen der Trübenkammern mit nassen Bestandteilen in Berührung gelangt.

Anschließend werden die Trübenkammern durch axiale Verschiebung der Gehäusemäntel 4 geöffnet. Der Raum unter den Filtereinheiten 5 ist nun völlig offen und die Filterkuchen können durch erneutes Drehen der Welle 8 und durch in Berührung bringen der Rotorplatten 43 mit den Filterkuchen von den Filterhilfsmitteln 28 heruntergearbeitet werden. Dazu können entweder die Rotorscheiben 7 in der schon zuvor erwähnten Weise auseinandergespreizt werden, oder es kann die Welle 8 mit Hilfe der Hydraulikeinheit 19, 20 hin- und hergefahren werden.

Mit Hilfe des Dreiwegeventils 21 ist, wie schon erwähnt, auch eine Rückspülung möglich, indem den Filterrahmen 6 von der Seite der Filtratkammer 31 her eine Waschflüssigkeit zugeführt wird, um die Filterhilfsmittel im Rückstrom zu reinigen. Dies kann sowohl bei geöffnetem, als auch bei geschlossenem Gehäuse erfolgen.

Fernerhin ist es möglich und vorteilhaft, die Trübenkammer mit einer Waschflüssigkeit auszusprühen. Diese kann vorteilhafterweise beispielsweise über die als Rohre ausgeführten Stangen 9 (bei der betreffenden Ausführungsform) zugeführt werden, die zu diesem Zweck, wie bereits erwähnt, mit Öffnungen oder Düsen 9a versehen ist, die in die Trübenkammern münden. Weiterhin kann auch eine Spülung von Seiten des Auslaufs 13 her erfolgen.

Wie schon erwähnt, können die Filterkuchen beim Abreinigen frei nach unten aus der Trübenkammer herausfallen, ohne daß sie dabei mit den Dichtungen oder Dichtungsflächen in Berührung kommen. Diese Dichtungsflächen bleiben daher sauber bzw. erfordern nur ein Minimum an Reinigungsaufwand, was sowohl die Arbeitsgeschwindigkeit der Presse als auch die Lebensdauer der Dichtungen erhöht.

Wie ersichtlich, sind für eine Trübenkammer mit einer Vielzahl von Filtereinheiten insgesamt nur zwei Gehäusedichtungen erforderlich, um den Gehäusemantel an den Endwänden der Trübenkammer abzudichten. Der bauliche Aufwand und die Instandhaltung der Filterpresse sind daher sehr vereinfacht. Wegen der Zwischenräume zwischen den Filtereinheiten und dem Gehäusemantel ist eine vollständige Reinigung der Trübenkammer nach dem Entleeren derselben nicht erforderlich, da zurückgebliebene Verunreinigungen nicht störend in Erscheinung treten.

**Patentansprüche**

1. Filterpresse mit einem Gehäuse (2, 4, 14) mit Trübeneinlaß und Stirnwänden (2, 14) und mit einem in einem Gestell (2, 3) abgestützten Gehäusemantel (4), dessen Innenraum einen im wesentlichen kreisförmigen Querschnitt hat und eine Kammer zur Aufnahme der zu filternden Trübe bildet, mit mehreren in dem Gehäuse (2, 4, 14) axial hintereinander angeordneten Filtereinheiten (5), jeweils enthaltend einen an dem Gestell (2, 3) abgestützten Filterrahmen (6), der eine auf der Radialebene von einem Filterhilfsmittel (28) abgedeckte Filtratkammer (31) umschließt, wobei zwischen den Filtereinheiten (5) und dem Gehäusemantel (4) ein ringförmiger Zwischenraum (33) ausgebildet ist, und mit einem Auslaßrohr (10), das sich im wesentlichen in axialer Richtung durch den Innenraum der Filterpresse erstreckt und mit dem die Filtratkammern (31) verbunden sind, und mit Einrichtungen zum gegenseitigen axialen Verschieben von Gehäusemantel (4) einerseits und Gestell (2, 3) und wenigstens einer Stirnwand (2, 14) andererseits, dadurch gekennzeichnet, daß zwischen den Filtereinheiten (5) jeweils eine Rotorscheibe (7) angeordnet ist, die den Filterhilfsmitteln (28) der benachbarten Filtereinheiten (5) gegenübersteht, alle Rotorscheiben (7) auf einer gemeinsamen, das Gehäuse (2, 4, 14) und die Filtereinheiten (5) zentrisch durchdringenden Hohlwelle (8) drehfest angebracht sind, ferner Einrichtungen (19; 50, 44, 48) vorgesehen sind, mit denen die radial verlaufenden Oberflächen der Rotorscheiben (7) gegen die Filtermittel (28) bewegbar sind, und daß die Filterrahmen (6) unabhängig vom Gehäusemantel (4) abgestützt sind, das Gestell (2, 3) und beide Stirnwände (2, 14) feststehend angeordnet sind und der Gehäusemantel (4) ihnen gegenüber axial verschiebbar gelagert ist.

2. Filterpresse nach Anspruch 1, dadurch gekennzeichnet, daß das Gestell wenigstens zwei von der Rotorwelle durchdrungene Tragplatten (2) aufweist, von denen die eine Stirnwand des Gehäuses bildet und die andere eine den anderen stirnseitigen Gehäuseabschluß bildende Stirnwand (14) abstützt, und daß im geschlossenen Zustand der Gehäusemantel (4) abgedichtet an der erstgenannten Tragplatte (2) und der Stirnwand (14) anliegt.

3. Filterpresse nach einem der vorhergehenden Ansprüche, dadurch gekennzeichnet, daß die Gehäuseachse horizontal angeordnet ist.

4. Filterpresse nach einem der vorhergehenden Ansprüche, dadurch gekennzeichnet, daß die den einen Gehäuseabschluß bildende Tragplatte (2) und die Stirnwand (14) Umfangsnuten (24, 25) aufweisen, in denen sich jeweils ein Dichtungs-O-Ring (26) befindet.

5. Filterpresse nach Anspruch 4, dadurch gekennzeichnet, daß die Umfangsnuten (24, 25) einen sich zur Nutöffnung hin verengenden, schwalbenschwanzförmigen Querschnitt aufweisen, die Nuten (24, 25) mit einer Leitung zur Zuführung eines Druckfluides verbunden sind, und zwischen den Dichtungsflächen des Gehäusemantels (4) und den die Nuten (24, 25) aufweisenden Umfangsflächen ein kleiner Ringspalt vorhanden ist.

6. Filterpresse nach einem der vorhergehenden Ansprüche, dadurch gekennzeichnet, daß innerhalb der den einen Gehäuseabschluß bildenden Tragplatte (2) ein Auslaßkanal ausgebildet ist, der mit dem Auslaßrohr (10) in Verbindung steht.

7. Filterpresse nach einem der vorhergehenden Ansprüche 2 bis 6, dadurch gekennzeichnet, daß die Stirnwand (14) an den Tragplatten (2) durch Stangen (9) abgestützt ist, die zugleich die Filterrahmen (6) in der Trübenkammer halten.

8. Filterpresse nach Anspruch 7, dadurch gekennzeichnet, daß die Stangen (9) hohl sind und in die Trübenkammer mündende Auslässe zwischen den Filterrahmen (6) aufweisen.

9. Filterpresse nach einem der Ansprüche 2 bis 6, dadurch gekennzeichnet, daß die Stirnwand (14) an der den einen Gehäuseabschluß bildenden Tragplatte (2) innerhalb der Trübenkammer mittels teilkreisförmiger Stützzargen (11) abgestützt ist, die zugleich auch die Filterrahmen (6) halten, und an der anderen, keinen Gehäuseabschluß bildenden Traplatte (2) mittels eines Käfigrahmens (22) abgestützt ist.

10. Filterpresse nach einem der Ansprüche 3 bis 9, dadurch gekennzeichnet, daß der Gehäusemantel (4) wenigstens einen Anschluß (13) im unteren Bereich aufweist.

11. Rotor für eine Filterpresse, insbesondere für eine solche nach einem der vorhergehenden Ansprüche, bestehend aus einer Hohlwelle (8) und mehreren daran drehfest in axialem Abstand angebrachten Rotorscheiben (7), die jeweils wenigstens einen mit der Hohlwellenbohrung (50) verbundenen Hohlraum (48) veränderlichen Volumens enthalten, der durch zwei symmetrisch zueinander angeordnete, in axialer Richtung gegenüber der Hohlwelle (8) bewegliche starre Platten (43) abgeschlossen ist, die in bezug auf die Hohlwelle (8) drehfest beidseitig einer drehfest an der Hohlwelle (8) befestigten Nabenscheibe (41) gehalten und mittels einer Federeinrichtung (46) in Richtung aufeinander zu vorgespannt sind, wobei elastische Dichtungseinrichtungen (44, 47; 61) vorgesehen sind, die den von den beiden Platten (43) begrenzten Hohlraum (48) abschließen.

12. Rotor nach Anspruch 11, dadurch gekennzeichnet, daß an der Nabenscheibe (41) mehrere axial verlaufende Führungsbüchsen (42) exzentrisch und vorzugsweise auf einem zentrischen Kreis verteilt befestigt sind, in die an den Platten (43) befestigte Zapfen (45) eingreifen.

13. Rotor nach Anspruch 12, dadurch gekennzeichnet, daß jeder Zapfen eine Führungshülse (45) ist, die jeweils eine Bohrung in der zugehörigen Platte (43) durchdringt und an ihrem äußeren Ende einen an der Platte (43) festgelegten Flanschring (52) aufweist, und die an der Platte (43) abgedichtet ist.

14. Rotor nach Anspruch 13, dadurch gekennzeichnet, daß in jedem Paar Führungshülsen (45) eine Schraubenzugfeder (46) angeordnet ist, die endseitig an den Führungshülsen (45) verankert ist.

15. Rotor nach Anspruch 14, dadurch gekennzeichnet, daß zur Verankerung der Zugfeder (46) am einen Ende eine Einstellmutter (58) vorgesehen ist.

16. Rotor nach einem der Ansprüche 11 bis 15, dadurch gekennzeichnet, daß die beiden Platten (43) einer Rotorscheibe (7) an ihrem Umfang mittels einer flexiblen Dichtung (47) etwa U-förmigen Querschnitts miteinander verbunden sind.

17. Rotor nach einem der Ansprüche 11 bis 16, dadurch gekennzeichnet, daß die beiden Platten (43) einer Rotorscheibe (7) an der Hohlwelle (8) mittels O-Ringen (44) abgedichtet sind.

18. Rotor nach einem der Ansprüche 11 bis 16, dadurch gekennzeichnet, daß jede der Platten (43) an ihrem inneren Umfang nahe der Hohlwelle (8) mittels einer flexiblen Dichtung (61) etwa U-förmigen Querschnitts mit der Nabenscheibe (41) verbunden ist, und daß die Nabenscheibe (41) eine Bohrung (66) aufweist, die die Axialbohrung (50) der Hohlwelle (8) mit dem von den Platten (43) und dem U-förmigen Dichtungen (47, 61) umschlossenen Hohlraum (48) verbindet.

19. Rotor nach einem der Ansprüche 11 bis 18, dadurch gekennzeichnet, daß jede Platte (43) wenigstens eine axial vorstehende, sich vom inneren bis zum äußeren Umfang erstreckende Rippe (51) aufweist.

20. Rotor für eine Filterpresse, insbesondere für eine solche nach einem der Ansprüche 1 bis 10 bestehend aus einer Hohlwelle und mehreren daran drehfest in axialem Abstand angebrachten Rotorscheiben, wobei jede Rotorscheibe aus einer drehfest mit der Hohlwelle verbundenen Nabenscheibe und zwei sich parallel dazu erstreckenden, steifen, axial verschiebbaren Preßplatten besteht, an der Nabenscheibe mehrere hydraulische oder pneumatische Kolben-Zylinder-Einheiten axial schwimmend und in bezug auf die Hohlewelle drehfest gelagert sind, von denen die Kolben mit der einen Preßplatte und die Zylinder mit der anderen Preßplatte verbunden sind, und daß die Kolben/Zylinder-Einheiten mit wenigstens einer sich längs der Hohlwelle erstreckenden Leitung zur gesteuerten Zuführung eines Druckfluides verbunden sind.

21. Rotor nach Anspruch 20, dadurch gekennzeichnet, daß am äußeren Rand der Preßplatten Einrichtungen zum Abschließen des Rahmens zwischen den Preßplatten angeordnet sind.

22. Rotor nach Anspruch 20 oder 21, dadurch gekennzeichnet, daß die Kolben/Zylinder-Einheiten in zwei Arbeitsrichtungen mit Druckfluid beaufschlagbar sind.

**Claims**

1. A filter press, comprising a housing (2, 4, 14) having a pulp inlet and end walls (2, 14), and comprising a casing (4) supported in a frame (2, 3), said casing having an interior cavity of substantially circular cross-section and forming a chamber for receiving the pulp to be filtered, further comprising a plurality of filter units (5) coaxially aligned within said housing (2, 4, 14) one behind the other and composed each of a filter frame (6) mounted in said frame (2, 3) and defining a filtrate chamber (31) covered in a radial plane by a filter medium (28), an annular clearance (33) being formed between said filter units (5) and said casing (4), and further comprising a discharge pipe (10) extending through the interior of the filter press in a substantially axial direction, said filtrate chambers (31) being in communication therewith, and including means for relatively moving the casing (4) on one hand and the frame (2, 3) and at least one of said end walls (2, 14) on the other hand in axial direction with respect to each other, characterized in that a rotor disk (7) is disposed between each two filter units (5), facing the filter media (28) of the adjacent filter units (5), all said rotor disks (7) being non-rotatably mounted on a common hollow shaft (8) extending centrally through said housing (2, 4, 14) and said filter units (5), means (19; 50, 44, 48) being provided by which the radially extending surfaces of said rotor disks (7) may be moved towards the filter media (28), and that said filter frames (6) are supported independently of said casing (4), said frame (2, 3) and both end walls (2, 14) are fixedly disposed, said casing (4) being mounted so as to be axially displaceable with respect to said end walls.

2. A filter press according to claim 1, characterized in that said frame comprises at least two support walls (2) having said rotor shaft passing therethrough, one of said support walls forming an end wall of said housing, and the other one supporting an end wall (14) forming the other end closure of said housing, and that in the closed state of said housing said casing (4) is in sealing engagement with said first named support wall (2) and said end wall (14).

3. A filter press according to any of the preceding claims, characterized in that the axis of said housing extends in a horizontal plane.

4. A filter press according to any of the preceding claims, characterized in that the support wall (2) forming said one of said end closures and said end wall (14) are formed with peripheral grooves (24, 25) accommodating a respective O-ring seal (26).

5. A filter press according to claim 4, characterized in that said peripheral grooves (24, 25) are of a cross-sectional dovetail configuration converging towards its open side, said grooves (24, 25) being connected to conduit means for the supply of a pressure fluid, a narrow annular clearance being formed between the sealing surfaces of said casing (4) and the peripheral surfaces formed with said peripheral grooves (24, 25).

6. A filter press according to any of the preceding claims, characterized in that said support wall (2) acting as one of said housing end closures is formed with an interior outlet passage communicating with said discharge pipe (10).

7. A filter press according to any of claims 2 to 6, characterized in that said end wall (14) is supported on said support walls (2) by means of rods (9) simultaneously acting to support said filter frames (6) within said pulp chamber.

8. A filter press according to claim 7, characterized in that said rods (9) are hollow and formed with outlets opening into said pulp chamber between said filter frames (6).

9. A filter press according to any one of claims 2 to 6, characterized in that said end wall (14) is supported within said pulp chamber on said support wall (2) forming said one of said housing end closures by means of mounting frame members (11) of part-circular cross-sectional shape simultaneously acting to support said filter frames (6), and on said other support wall (2) not forming a housing end closure by means of a cage frame member (22).

10. A filter press according to any of claims 3 to 9, characterized in that said casing (4) is formed with at least one port (13) in its lower portion.

11. A rotor for a filter press, particularly for a filter press according to any of the preceding claims, comprising a hollow shaft (8) and a plurality of rotor disks (7) non-rotatably mounted on said shaft at axial spacings, each said rotor disk (7) including at least one variable-volume cavity (48) communicating with the bore (50) of said hollow shaft (8) and defined by a pair of symmetrically arranged rigid plates (43) mounted for axial displacement relative to said hollow shaft (8) and being secured non-rotatably with respect to said hollow shaft (8) on either side of a hub disk (41) non-rotatably mounted on said hollow shaft (8), and biased towards one another by resilient means (46), resilient sealing means (44, 47; 61) being provided for defining said cavity (48) in cooperation with said two plates (43).

12. A rotor according to claim 11, characterized in that a plurality of axially extending guide bushings (42) are secured to said hub disk (41) at eccentric positions and preferably in a concentric circular arrangement for engagement by guide studs (45) secured to said plates (43).

13. A rotor according to claim 12, characaterized in that each guide stud comprises a guide sleeve portion (45) extending through a bore in the respective plate (43), and an annular flange (52) at the outer end of said sleeve member (45) sealingly secured to the respective plate (43).

14. A rotor according to claim 13, characterized in that each pair of cooperating guide sleeve members (45) encloses a coiled tension spring (46) secured to said guide sleeve members (45) adjacent respective ends thereof.

15. A rotor disk according to claim 14, characterized in that an adjustment nut (58) is provided for securing said tension spring (46) adjacent one of its ends.

16. A rotor disk according to any of claims 11 to 15, characterized in that the two plates (43) of each rotor disk (7) are interconnected along their periphery by means of a flexible sealing gasket (47) of generally U-shaped cross-sectional configuration.

17. A rotor according to any of claims 11 to 16, characterized in that the two plates (43) of any rotor disk (7) are sealingly supported on a said hollow shaft (8) with the aid of O-ring seals (44).

18. A rotor disk according to any of claims 11 to 16, characterized in that each of said plates (43) is connected to said hub disk (41) along its inner periphery adjacent said hollow shaft (8) by means of a flexible sealing gasket (61) of generally U-shaped cross-sectional configuration, said hub disk (41) being formed with a bore (66) communicating the axial bore (50) of said hollow shaft (8) with said cavity (48) defined by said plates (43) and said U-shaped sealing gaskets (47, 61).

19. A rotor according to any of claims 11 to 18, characterized in that each plate (43) is provided with at least one axially projecting rib (51) extending from its inner to its peripheral edge.

20. A rotor for a filter press, particularly for a filter press according to any of claims 1 to 10, comprising a hollow shaft and a plurality of rotor disks non-rotatably disposed thereon in axial spacings, wherein each said rotor disk comprises a hub-disk non-rotatably connected to said hollow shaft, and two axially displaceable rigid pressure plates extending parallel thereto, a plurality of hydraulic or pneumatic piston/cylinder units being mounted on said hub disk in an axially floating manner and at circumferentially fixed positions with respect to said hollow shaft, the pistons of said units being connected to one of said pressure plates and the cylinders thereof to the other pressure plate, each said piston/cylinder unit communicating with at least one conduit extending along said hollow shaft for the controlled supply of a pressure fluid.

21. A rotor according to claim 20, characterized in that means are provided at the outer periphery of said pressure plates for enclosing the space between said pressure plates.

22. A rotor according to claim 20 or 21, characterized in that said piston/cylinder units are adapted to have a pressure fluid supplied thereto for operation in opposite directions.

## Revendications

1. Filtre-presse comprenant une enveloppe (2, 4, 14) à entrée pour le milieu à filtrer et à parois d'about (2, 14) et une virole d'enveloppe (4) montée dans une carcasse (2, 3) et dont l'intérieur présente une section transversale essentiellement circulaire et forme une chambre destinée à recevoir le milieu à filtrer, plusieurs unités de filtration (5) disposées axialement l'une derrière l'autre dans l'enveloppe (2, 4, 14), comprenant chacune un cadre de filtration (6) monté sur la carcasse (2, 3), qui entoure une chambre à filtrat (31) couverte dans le plan radial par un moyen de filtration (28), un intervalle annulaire (33) étant ménagé entre les unités de filtration (5) et la virole d'enveloppe (4), et un tube de sortie (10) qui s'étend essentiellement dans le sens axial à travers l'intérieur du filtre-presse et auquel les chambres à filtrat (31) sont raccordées, et des dispositifs pour déplacer réciproquement, dans le sens axial, d'une part, la virole d'enveloppe (4) et, d'autre part, la carcasse (2, 3) ainsi qu'au moins une paroi d'about (2, 14), caractérisé en ce qu'entre les unités de filtration (5) est chaque fois installé un disque de rotor (7) qui fait face aux moyens de filtration (28) des unités de filtration voisines (5), tous les disques de rotor (7) sont montés, calés en rotation, sur un arbre creux commun traversant en leur centre l'enveloppe (2, 4, 14) et les unités de filtration (5), et des dispositifs (19, 50, 44, 48) sont prévus pour amener les faces radiales des disques de rotor (7) contre les moyens de filtration (28), et en ce que les cadres de filtration (6) sont montés indépendamment de la virole d'enveloppe (4), la carcasse (2, 3) et les deux parois d'about (2, 14) sont montées fixes et la virole d'enveloppe (4) est montée à coulissement axial par rapport à ces éléments.

2. Filtre-presse suivant la revendication 1, caractérisé en ce que la carcasse comprend au moins deux plateaux de support (2) traversés par l'arbre de rotor, dont le premier forme une paroi d'about de l'enveloppe et l'autre support une paroi d'about (14) formant l'autre paroi de fond de l'enveloppe, et que, dans l'état fermé, la virole d'enveloppe (4) est en contact étanche avec le premier plateau de support (2) et la paroi d'about (14).

3. Filtre-presse suivant l'une et/ou l'autre des revendications précédentes, caractérisé en ce que l'axe de l'enveloppe est disposé horizontalement.

4. Filtre-presse suivant l'une quelconque des revendications précédentes, caractérisé en ce que le plateau de support (2) formant la première paroi de fond de l'enveloppe et la paroi d'about (14) présentent des gorges périphériques (24, 25) dans chacune desquelles est logé un anneau torique d'étanchéité (26).

5. Filtre-presse suivant la revendication 4, caractérisé en ce que les gorges périphériques (24, 25) présentent une section transversale en queue-d'aronde allant en se rétrécissant vers l'orifice de la gorge, les gorges (24, 25) sont en communication avec un canal pour l'amenée d'un fluide sous pression, et entre les surfaces d'étanchéité de la virole d'enveloppe (4) et les surfaces périphériques présentant les gorges (24, 25) est ménagé un petit interstice annulaire.

6. Filtre-presse suivant l'une quelconque des revendications précédentes, caractérisé en ce qu'à l'intérieur du plateau de support (2) formant un fond de l'enveloppe est ménagé un canal de sortie qui est en communication avec le tube de sortie (10).

7. Filtre-presse suivant l'une quelconque des revendications 2 à 6, caractérisé en ce que la paroi d'about (14) est supportée par les plateaux de support (2) par des tiges (9) qui maintiennent en même temps les cadres de filtration (6) dans les chambres à milieu à filtrer.

8. Filtre-presse suivant la revendication 7, caractérisé en ce que les tiges (9) sont creuses et présentent des sorties débouchant dans les chambres à milieu à filtrer, entre les cadres de filtration (6).

9. Filtre-presse suivant l'une quelconque des revendications 2 à 6, caractérisé en ce que la paroi d'about (14) est supportée par le plateau de support (2) formant le premier fond de l'enveloppe, à l'intérieur des chambres à milieu à filtrer par des éléments de support en partie circulaires (11) qui maintiennent en même temps les cadres de filtration (6) et est supportée par l'autre plateau de support (2) qui ne forme pas de fond de l'enveloppe, au moyen d'une structure en forme de cage (22).

10. Filtre-presse suivant l'une quelconque des revendications 3 à 9, caractérisé en ce que la virole d'enveloppe (4) comporte au moins un raccord (13) dans sa zone inférieure.

11. Rotor pour un filtre-presse, en particulier pour un filtre-presse selon l'une quelconque des revendications précédentes, constitué d'un arbre creux (8) et de plusieurs disques de rotor (7) axialement espacés et calés en rotation sur cet arbre creux, ces disques contenant chacun au moins un creux (48) de volume variable qui communique avec le conduit (50) de l'arbre creux et qui est fermé par deux plaques rigides (43) symétriques l'une par rapport à l'autre et mobiles dans le sens axial par rapport à l'arbre creux (8), ces plaques étant maintenues calées en rotation par rapport à l'arbre creux (8), de part et d'autre d'un disque de moyeu (41) calé en rotation sur l'arbre creux (8) et étant présollicitées l'une vers l'autre au moyen d'un dispositif à ressort (46), des moyens d'étanchéité élastiques (44, 47, 61) étant prévus pour rendre étanche le creux (48) défini par les deux plaques (43).

12. Rotor suivant la revendication 11, caractérisé en ce qu'au disque de moyeu (41) sont fixées excentriquement et de préférence réparties sur un cercle central plusieurs douilles de guidage axiales (42) dans lesquelles s'engagent des tenons (45) fixés aux plaques (43).

13. Rotor suivant la revendication 12, caractérisé en ce que chaque tenon est une douille de guidage (45) qui traverse chaque fois une ouverture prévue dans la plaque (43) associée et présente, sur son extrémité extérieure, une collerette (52) fixée à la plaque (43) et adaptée de manière étanche à celle-ci.

14. Rotor suivant la revendication 13, caractérisé en ce que dans chaque paire de douilles de guidage (45) est installé un ressort hélicoïdal de traction (46) qui, à son extrémité, est ancré aux douilles de guidage (45).

15. Rotor suivant la revendication 14, caractérisé en ce qu'un écrou de réglage (58) est prévu pour ancrer le ressort de traction (46) à une extrémité.

16. Rotor suivant l'une quelconque des revendications 11 à 15, caractérisé en ce que les deux plaques (43) d'un disque de rotor (7) sont reliées l'une à l'autre, à leur périphérie, au moyen d'un joint d'étanchéité flexible (47) de section transversale en substance en forme de U.

17. Rotor suivant l'une quelconque des revendications 11 à 16, caractérisé en ce que les deux plaques (43) d'un disque de rotor (7) sont rendues étanches au niveau de l'arbre creux (8) au moyen d'anneaux toriques (44).

18. Rotor suivant l'une quelconque des revendications 11 à 16, caractérisé en ce que chacune des plaques (43) est reliée, au niveau de sa périphérie intérieure proche de l'arbre creux (8), au moyen d'un joint d'étanchéité flexible (61) de section transversale en substance en forme de U, au disque de moyeu (41) et ce disque de moyeu (41) présente un canal (66) qui raccorde le conduit axial (50) de l'arbre creux (8) au creux (48) défini par les plaques (43) et les joints d'étanchéité en U (47, 61).

19. Rotor suivant l'une quelconque des revendications 11 à 18, caractérisé en ce que chaque plaque (43) présente au moins une nervure (51) en saillie dans le sens axial qui s'étend depuis sa périphérie interne jusqu'à sa périphérie externe.

20. Rotor pour un filtre-presse, en particulier pour un filtre-presse suivant l'une quelconque des revendications 1 à 10, constitué d'un arbre creux et de plusieurs disques de rotor espacés axialement l'un de l'autre et calés à rotation sur cet arbre, chaque disque de rotor étant constitué d'un disque de moyeu relié, calé en rotation, à l'arbre creux et de deux plaques de pression axialement mobiles, rigides, s'étendant parallèlement au disque de moyeu, plusieurs unités à piston et cylindre hydrauliques ou pneumatiques sont montées axialement flottantes sur les disques de moyeu et calées en rotation par rapport à l'arbre creux, le piston de ces unités étant relié à une plaque de pression et le cylindre à l'autre plaque de pression et les unités à piston et cylindre sont raccordées à au moins un conduit s'étendant le long de l'arbre creux pour l'admission commandée d'un fluide sous pression.

21. Rotor suivant la revendication 20, caractérisé en ce que des moyens sont disposés au niveau des bords extérieurs des plaques de pression pour assurer l'étanchéité du cadre entre les plaques de pression.

22. Rotor suivant la revendication 20 ou 21, caractérisé en ce que les unités à piston et cylindre peuvent être alimentées au moyen de fluide sous pression dans deux directions de travail.

(A)

(B)

FIG.1

FIG. 2

FIG. 3

FIG. 4

FIG. 5

FIG.6

FIG.7

FIG.8

FIG.9